(19) Europäisches Patentamt
European Patent Office
Office européen des brevets

(11) **EP 4 647 216 A1**

(12) **EUROPEAN PATENT APPLICATION**

(43) Date of publication:
**12.11.2025 Bulletin 2025/46**

(21) Application number: **24174524.9**

(22) Date of filing: **07.05.2024**

(51) International Patent Classification (IPC):
**B25J 9/16** (2006.01)

(52) Cooperative Patent Classification (CPC):
**B25J 9/1692;** G05B 2219/39018;
G05B 2219/39021; G05B 2219/39024;
G05B 2219/39047

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Bayerische Motoren Werke Aktiengesellschaft**
**80809 München (DE)**

(72) Inventors:
• **Park, Chulhun**
**Greer, 29651 (US)**
• **Cantrell, Kenneth**
**Inman, 29349 (US)**
• **Wheeler, Brandon**
**Greer, 29651 (US)**

(54) **A METHOD FOR PRECISION ALIGNMENT OF A TOOL OF A MANUFACTURING ROBOT, CALIBRATION DEVICE AND MANUFACTURING ROBOT**

(57) The invention relates to a method for precision alignment of a tool (1) attachable to an arm end (2) of a robot arm (3) of a manufacturing robot (4), wherein a current tool center point (TCP) for the tool (1) is determined by using a calibration device (5) comprising a target (6) mounted on a fixed base (7) and a calibration tool (8) with a plurality of pointers (9), the tip (10) of which each forms its own tool center point, which is mounted on the arm end (2). Furthermore the method relates to a calibration device (5) and a manufacturing robot (4).

Fig.1

EP 4 647 216 A1

**Description**

The invention relates to a method for precision alignment of a tool attachable to an arm end of a robot arm of a manufacturing robot according to patent claim 1. The invention further relates to a calibration device for precision alignment of a tool attachable to an arm end of a robot arm and a corresponding manufacturing robot according to patent claims 8 and 10.

Manufacturing robots (short: robots) are often used for manufacturing purposes. Such a manufacturing robot or robot may comprise a robot arm with an arm end where a tool, for example, a gripper is attached, for processing an object. The tool furthermore may be a joining tool or welding device, and the object may be part of a car body. For processing the object with the tool, it is necessary to know the position of the tool and the object.

There are many cases in which robots and arm grippers have to be modified due to design changes, adaptations for future vehicle models on existing systems or restoring robot grippers after an accident. The restoration of previous states takes some time due to the permanent changes caused by damage to the robot and the gripper arms.

A lot of commercially available TCP (tool center point) correction systems are utilizing sensing devices in very limited and specific applications. Furthermore, EP 2 767 370 A2 shows a robot system and EP 2 783 814 A2 shows another robot system and a calibration method.

It is the object of the invention to provide a method, a calibration device and a manufacturing robot, which allow an easy to recover prior state of the robot, for example, a design change or a crash with minimal impact to quality.

According to the invention, the aforementioned object is achieved by the subject matter of the independent patent claims.

Advantages, advantageous embodiments, and further developments of the invention are the subject matter of the independent patent claims, the description and the drawings.

A first aspect of the invention relates to a method for precision alignment of a tool attachable to an arm end of a robot arm of a manufacturing robot, wherein a current tool center point (TCP) for the tool is determined by using a calibration device comprising a target, in particular a sphere with a fixed center, mounted on a fixed base, in particular reachable with the arm end or the tool mounted on the arm end, and a calibration tool with a plurality of pointers, i.e. at least three pointers, the tip of which each forms its own tool center point, which is mounted on the arm end.

The alignment may be performed after design changes, for recovery purpose, in particular after crash, and many more reasons. The tool could be every tool to manipulate an object, which should be processed by the manufacturing robot, for example, a car body part.

The method according to the invention comprises the following steps:

In a first step, approaching the target with the respective tip of the respective one of the plurality of pointers, whereby the tip of the respective pointer touches the target. If the target is a sphere or a part of it, then the tip of the respective pointer touches the sphere center of the target.

In a second step, determining a respective pose, which comprises a position of the target and an orientation of the respective pointer or its tip to the target or towards the target, in a particular space-fixed coordinate system.

In a third step, comparing the respective determined pose with a respective initial pose, whereby a respective difference value is determined for each of the poses determined or measured in step 2.

In a fourth step, determining the current total center point for the tool using the determined difference values for each of the total center points of each tip, for example, via deriving a transformation from the difference values.

Advantageously, a plurality of pointers are four pointers, but there may be any number of pointers, with at least three pointers. In other words, the multiple pointers or a total of four pointers are attached to the end of the arm, and each time one of the pointers touches the center of the sphere or the target, the orientation value of the calibration tool is stored with respect to the base coordinate system. The pointers may be built as in particular four parallel blades, which each comprising one of the tips. If four pointers are used, these four position values can be used as target positions or starting positions, particularly during the first run of the procedure or the first two steps. Follow-up measurements of these four points, for example after a change to the robot, are then stored as moving positions or poses. A possible objective to perform the transformation is to find six degrees of freedom (six-DOF). In particular, a max cross product concept, simple optimization routine, and Euler ZYX conventions may be used.

In comparison to conventional TCP correction systems according to the state of the art, the inventive method with the calibration device as shown here, is far superior. Conventional TCP correction systems are limited to specific applications and also heavily rely on third-party devices, such as distance sensor, stereo camera, or point cloud camera. Adding a second device makes systems more complicated and harder to debug when a solution is not properly working.

The invention may be applied on every end of arm tool for gripper crash recovery and gripper design modification and verifications due to new model integrations, for example. An advantage is, for example, that no extra sensors such as cameras need to be used.

In an advantageous embodiment of the invention, the calibration tool is mounted at arm end or the end of the arm instead of the tool. Alternatively, according to the invention the calibration tool is mounted at arm end together with the tool. In other words, the calibration tool, with its plurality of pointers, in particular four pointers, mounted on the end of the robot arm of the manufacturing robot instead of the tool for which the TCP should be aligned. Alternatively, the tool and the calibration tool are both mounted at the arm end, wherein the calibration tool may be a component of the tool itself or is mounted besides the tool. An advantage of this embodiment is that the method could be used very flexible due to using the calibration tool with or without the tool which should be aligned.

In another advantageous embodiment of the invention, a rotation and/or a translation is determined for the respective difference value on the basis of the comparison. In other words, in order to find the six degrees of freedom for each tip-target-pair, a rotation and a translation is searched, which translates the coordinates of the target to the base coordinate system or the space-fixed coordinate system. One advantage of this embodiment is that, even in the event of a complicated recovery due to the possible movements of the robot arm after a crash, it is possible to react flexibly to any change in position.

In a further embodiment of the invention, the rotation is determined by an optimization method. In other words, an optimization algorithm is used to determine the rotation for each different value for each of the respective determined poses. This has the advantage that the rotation can be determined particularly efficiently.

In yet another embodiment of the present invention, the respective initial pose is determined with a first bracket (or holder) and the respective pose is determined with a second bracket (or holder) of the robot. In other words, the method is carried out before and after a bracket or holder exchange, wherein the bracket or holder is used to hold the tool at the arm end. So the first step of the method may be a bracket exchange, and the initial pose for each tip of the plurality of pointers is already determined. The advantage of this embodiment is that different bracket variations could be compensated and used all the same way.

In still another embodiment of the present invention, the target is placed on a component or an object to be processed by the robot. In other words, the position of the target is on an object, which is placed within the robot's range for a manipulation via the robot itself. For example, if a gripper is twisted after a crash, a component, such as a vehicle door, which is supposed to be gripped by the gripper, is used to place the target on. It is an advantage of this embodiment that the precision alignment could be performed under real life conditions and therefore the manufacturing robot could be used extra efficiently.

In yet another embodiment of the present invention, several differently placed targets are used. In other words, there is more than one target, and each target is placed in different locations, for example, one is placed on the floor where the manufacturing robot is placed, another could be placed on a wall in reach of the robot arm. This is, in particular, good for redundancy. An advantage of this embodiment is that the alignment could be very precise.

A second aspect of the present invention relates to a calibration device for precision alignment of a tool attachable to an arm end of a robotic arm of a manufacturing robot, comprising a target mounted on a fixed base and a calibration tool having a plurality of pointers, the tip of which each forms its own tool center point, and adapted for a method according to the first aspect of the present invention.

Advantageous embodiments and further developments of the first aspect of the invention are to be regarded as advantages and advantageous embodiments of the second aspect of the invention and vice versa.

In an embodiment of the invention, the target is designed as a spherical element rotatable mounted in a socket of the base, wherein its center being fixed relative to the base during rotation, so if the spherical element is, for example, touched by a tip of one of a respective of the plurality of pointers. In other words, the target comprises at least two parts which are aligned in such a way that a sphere with its center could be moved around in the base but the position of the sphere is always fixed relative to the base during rotational movement. An advantage of this embodiment is that the target could be used very precise to determine the orientation of each pointer towards its center.

A third aspect of the present invention relates to a manufacturing robot comprising a calibration unit according to the second aspect of the present invention and/or designed to perform a method according to the first aspect of the present invention.

Advantages and advantageous embodiments of the first and second aspects of the invention are to be regarded as advantages and advantageous embodiments of the third aspect of the invention and vice versa.

Further features of the invention emerge from the claims, the figures and the description of the figures. The features and combinations of features mentioned above in the description as well as the features and combinations of features mentioned below in the description of the figures and/or shown in the figures alone can be used not only in the combination specified in each case, but also in other combinations or on their own.

The invention will now be explained in more detail using a preferred exemplary embodiment and with reference to the drawings.

The drawings show in:

Fig. 1     a perspective view of a manufacturing robot with a robot arm and tool mounted on the arm end;

Fig. 2     a calibration device with a target mounted on a base and a calibration tool comprising a plurality of pointers where one tip of one respective pointer touches the target;

Fig. 3     a perspective view of the robot arm with the calibration tool mounted on the arm end via a bracket;

Fig. 4     a perspective view of a car door as an object which is manipulated by the manufacturing robot;

Fig. 5     a schematic diagram of a first step of a method for precise alignment of the tool;

Fig. 6     a schematic diagram of a second step of a method for precise alignment of the tool;

Fig. 7     a schematic diagram of a third step of a method for precise alignment of the tool;

Fig. 8     a schematic diagram of a fourth step of a method for precise alignment of the tool; and

Fig. 9     a schematic diagram of a fifth step of a method for precise alignment of the tool.

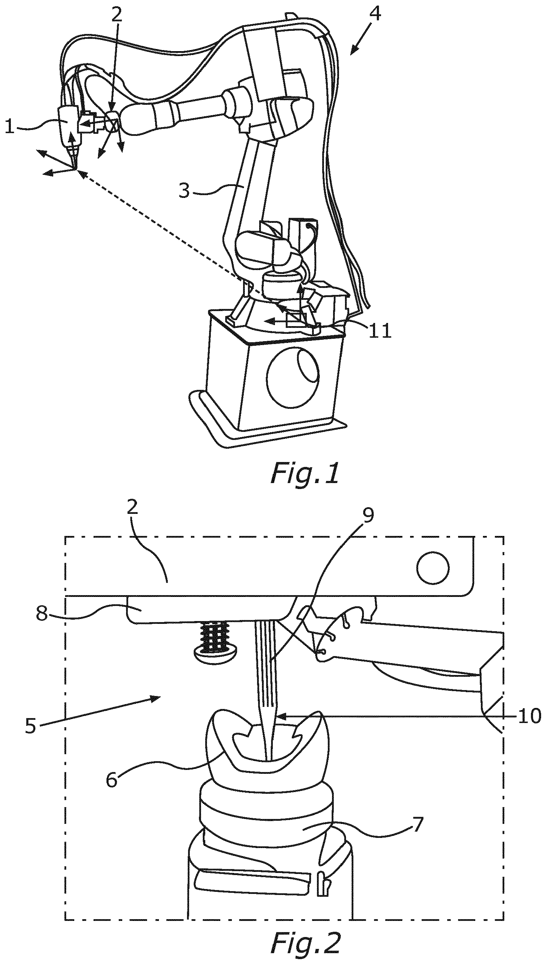

Fig. 1 shows in a perspective view a manufacturing robot 4 comprising a robot arm 3 with an arm end 2 where attachable tool 1 is attached, wherein the manufacturing robot 4 is placed on a socket, which may build the base of a space-fixed coordinate system 11. The tool 1 could be placed on the arm end 2 via a bracket 12. The tool may be a gripper, a joining tool, a welding device, or any kind of tool through which a component may be manipulated by the robot

Due to design changes, for example, for manufacturing new parts or components via the manufacturing robot 4 or for recovery after crash of the tool 1 with, for example, the components, it could be necessary to align the tool center point for the tool 1, in particular again. Therefore, a method for a precision alignment as well as a corresponding calibration device 5 for the precision alignment are also introduced here besides the manufacturing robot 4.

The calibration device 5 is at least partly shown in Fig. 2 and comprises a target 6 mounted on a fixed base 7 and a calibration tool 8 having a plurality of pointers 9, the tip 10 of which its forms its own tool center point for the calibration tool 8. The base 7 may be mounted in a fixed position in an area of a wall or floor that may be reached by the movable robot arm 3 from its arm end 2. The target 6 is in particular designed as a spherical element rotatable mounted in a socket of the base 7, its center being fixed relative to the base 7 during rotation. Fig. 2 shows one pointer 9 of the plurality of pointers 9 with its tip 10 touching the center of the target 6.

The method for the precision alignment of the tool 1 attachable to the arm end 2 of the robot arm 3 of the manufacturing robot 4 comprises the following steps:

In a first step, approaching the target with the respective tip 10 of the respective one of the plurality of pointers 9, whereby the tip 10 of the respective pointer 9 touches the sphere center of the target 6.

In a second step, determining a respective pose, which comprises a position of the target 6 and an orientation of the respective tip 10 or pointer 9 towards the target 6 in the space-fixed coordinate system 11.

A third step is comparing the respective determined pose with the respective initial pose, whereby a respective difference value is determined. The initial pose could be determined by the first two steps of the method so that a first measurement, for example with the first bracket 12, is made and for a precision alignment after changing the bracket 12 to a second bracket 12 the method is performed, wherein the different values for each pointer 9 are determined.

A fourth step is determining the current total center point for the tool 1 using the determined different values, wherein the coordinate system of tool 1 is transformed, for example to the space-fixed coordinate system 11.

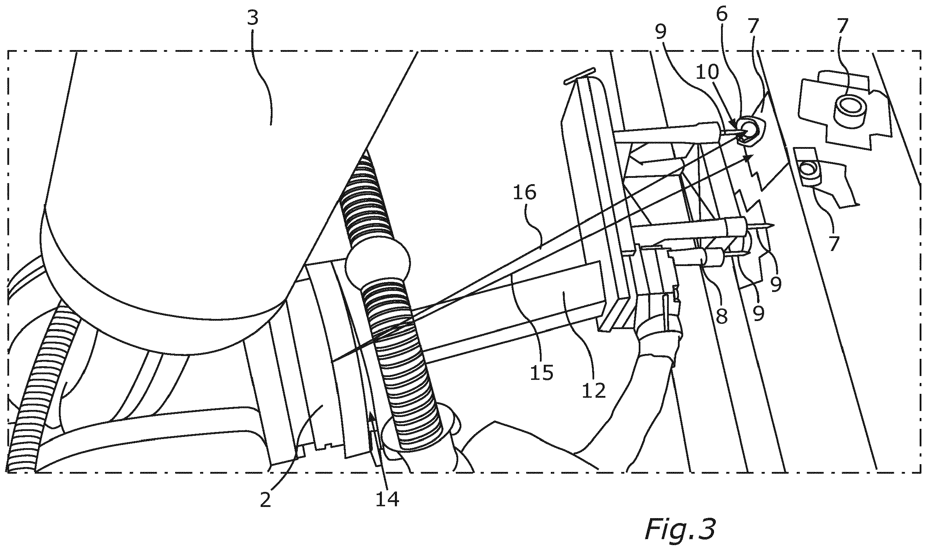

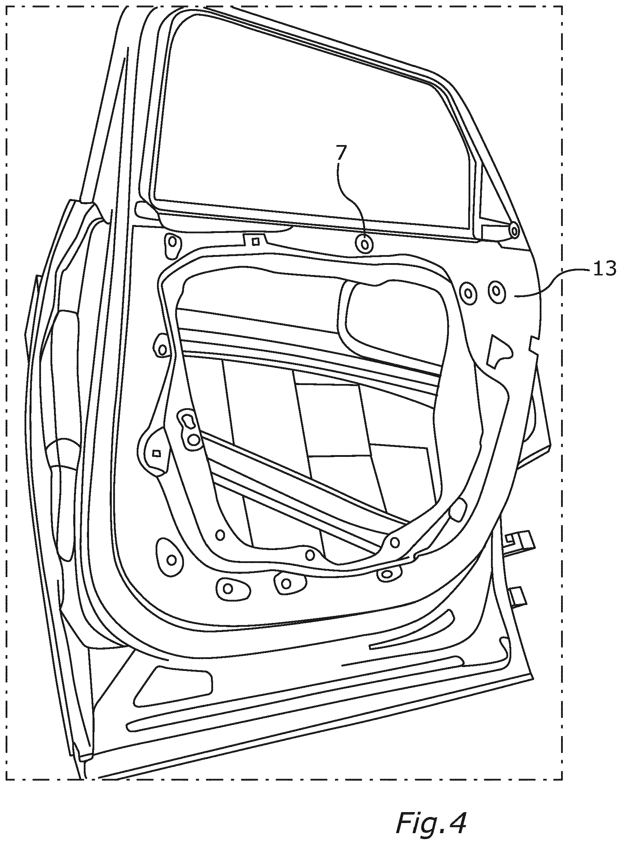

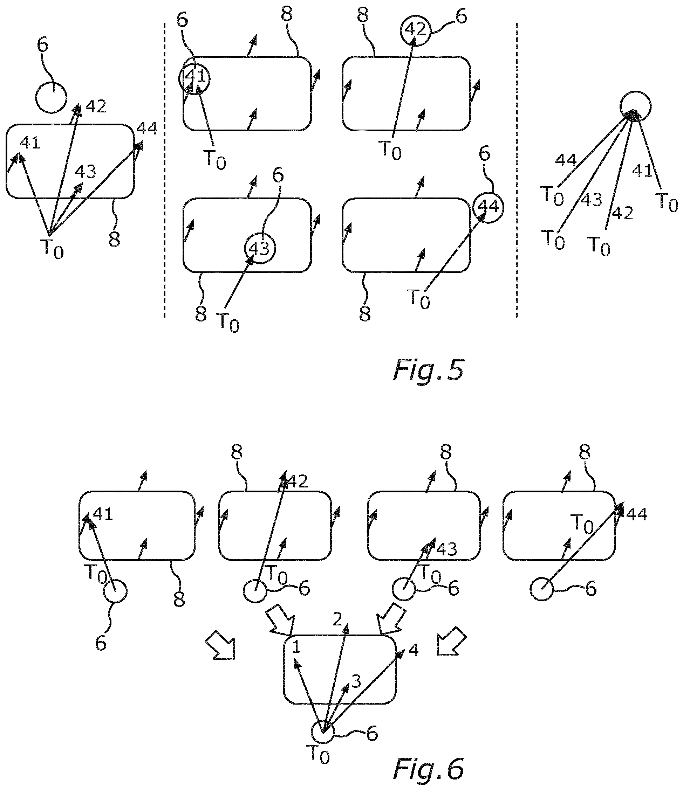

Fig. 3 and Fig. 4 show use cases in which the method could be used to advantage. Fig. 5 to Fig. 9 show how to carry out the process using several exemplary steps, with one step shown for each figure.

Fig. 3 shows in a perspective view the arm end 2 of the robot arm 3 with the bracket 12 and a plurality of bases 7 mounted on the wall. One of the bases hold the target 6. The calibration tool 8 comprises four pointers 9, each with a tip 10. Instead of the tool 1, the calibration tool 8 is attached to the bracket 12, which is connected to the end of the arm or arm end 2. Alternatively, the tool 1 and the calibration tool 8 could be attached together to the holder or bracket 12 and thus to the end of the arm or arm end 2.

As one may see, there is a gap 14 between a plate building the arm end 2 and the bracket 12. This gap 14 could be there due a crash. There are two arrows pointing from the center of the arm end 2 to the targets 6, one representing a vector 15 before the crash or for the initial pose and the other representing a vector 16 after the crash. So, this is a misalignment due to a crash which could be fixed by the method provided here.

Fig. 4 shows a perspective view of a car door, which is another example where the method could be used. So, the car door may be manipulated by a gripper, which is used as the tool 1. After a crash, the gripper could be twisted. If the gripper has to manipulate the car door as an object, it could be useful in a variation of the method that the target 6 is placed on the object, in this the example the car door, and the method is performed this way.

Another use case of the method could be to compensate different bracket variations of brackets 12. In addition, the method may be used to compensate for design changes, for example in a stud gun used as the tool 1 , wherein the stud gun may be moved and/or rotated at the arm end 2 of the robotic arm 3 when the stud gun is used to manipulate a new car door, for example.

Figs. 5 to 9 show key steps of the method.

Fig. 5 shows step S1, where each tool or each tip 10 of the calibration tool 8 touches the center of the sphere of the target 6. On the left-hand side of Fig. 5, the tip 10 is numbered 41 to 44, whereby the first digit "4" may be chosen arbitrarily, but it could, as in the example, indicate the number of pointers 9 that are in use. The second digit in particular is a consecutive numbering. T0 marks the tool center point. Rather Tool[0] is often the default tool frame that is pre-defined and locked as a reference point in the robot's control system. It might represent a standard configuration with no offsets or transformations applied. In some robotic system, Tool[0] might correspond to the "flange" of the robot, which is mounting plate at the end of arm to which tools are attached. So, each tip 10 touches the center of the target 6, so four vectors are gained pointing to the sphere.

Fig. 6 shows the vector transformation to the sphere center, which could be performed for the initial pose as well as the poses measured afterwards. The calibration tool 8 shown in Fig. 5 or the steps shown in Fig. 5 are in particular used for determining the initial pose for the pointers 9.

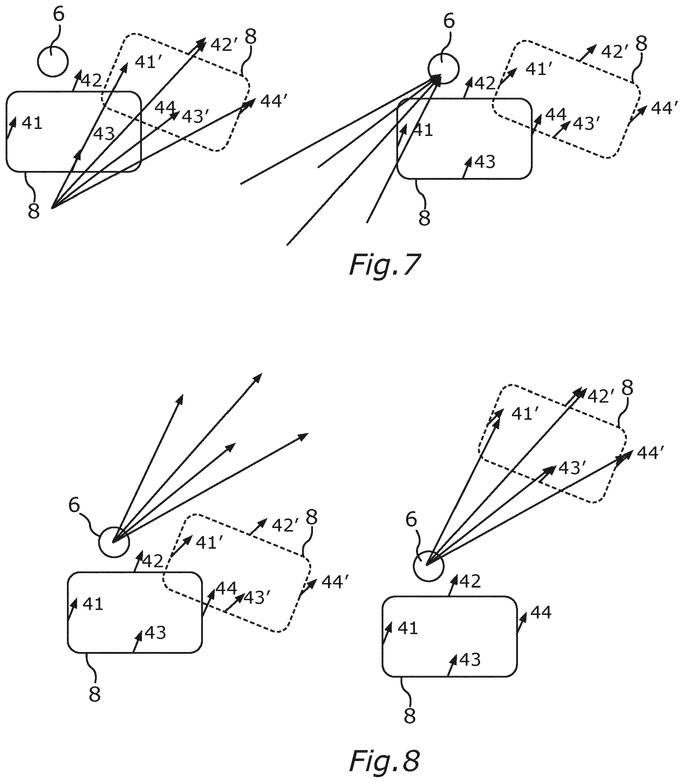

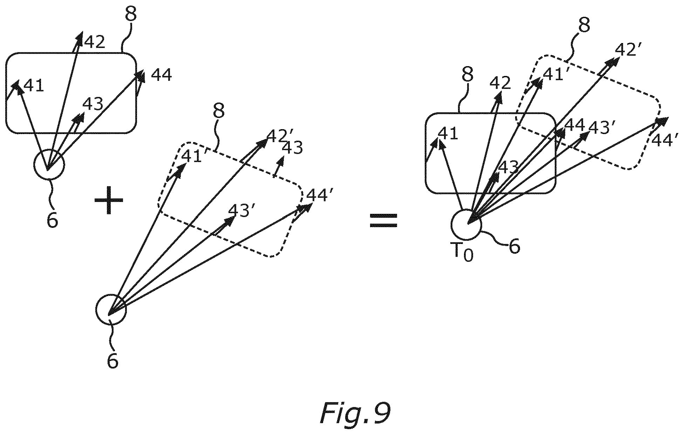

Fig. 7 shows the same steps as performed in Fig. 5 and 6, for example, after crash fixture where the dotted calibration tool 8 marks the new measured points. One may do the same projection or in particular rotation transformation, so that one gains the shifted origin of the crash fixture as shown in Fig. 8. Combining the measurements of the initial pose and the newly determined poses, one obtains a possible transformation between a pose with respect to T0, which may be transformed into the base, in particular the coordinate system 11. This is shown in Fig. 9.

So, in other words, four vectors for the calibration tool 8 are created for the initial pose and the pose where there are four tips 10 used for the calibration tool 8. With both measurements, creating a rotation matrix that represents the orientation of the tool 1 or the calibration tool 8 is feasible.

To shift datasets relative to T0 (Tool[0]): Find four vectors from Tool[0] to Tool[41], [42], [43], and [44] for each before and after datasets. Create rotation matrix that represent orientation of Tool and perform dot product operation to shift datasets relative to Tool[0].

To shift datasets centroid of 4 point sets: One may perform a dot product operation to shift data sets relative to T0. This is used to find the six degrees of freedom (6-DOF). In order to find 6-DOF, find rotation first then find translation.

For finding the rotation a(Rz), b(RY), c(Rx): Find Max Cross Product for initial values for optimization. Run Optimization to find minimize this cost function (Rot_Matrix) * BEFORE - AFTER. Then find translation x, y, z, for example via using original data and apply rotation values.

An algorithm may be:

Main- FindingRotation (FindMaxCP & PrivateSumSquares)-FindingTranslation-CalFindResiduals-rpy_xyz

In other words:

- Find vector from T41, T42, T43, T44 to T0 for before and after in Base[0] frame
- Transform all 4 points to Tool[0] orientation
- Call FindingRotation function
- Call FindingTranslation function
- Call FindResiduals function
- Find Inverse Transform Tool[0]

FindingRotation may comprise:

- Find Centroid of each dataset and shift datasets
- For shifted_before datasets
- Call FindMaxCP function to find max cross product values
  Find max cross product vector sets: vec1, vec2

V3_before = cross(v1_before, v1_before)
V2_before = cross(v3_before, v1_before)

- Normalize all 3 vectors
- Find V1_after, V2_after, V3_after similar way

Use same index used to find before data sets

For the translation an optimization with a maximum cross products concept, in particular for the initial values for optimization, may be used.

The construction of your BEFORE and AFTER matrices follows a logical process aiming to define a coordinate system based on dataset. This method acknowledges the fact that a set of three orthonormal vectors can define a coordinate system in three-dimensional space.

1. Finding two vectors with the largest cross product ensures that one is selecting two vectors that are most perpendicular (orthogonal) to each other. This step maximizes the numerical stability and avoids selecting vectors that are nearly parallel, which might lead to inaccuracies due to floating-point arithmetic.

2. After finding 'vec1_before' and 'vec2_before' as one largest orthogonal pair, one computes 'vec3_before' as their cross product. This step guarantees that 'vec3_before' is orthogonal to both 'vec1_before' and 'vec2_before'.

3. One recomputes 'vec2_before' by the cross product of 'vec3_before' and 'vec1_before' to ensure that all three vectors are perfectly orthogonal. This, again, is a precaution to avoid any small numerical deviations from orthogonality.

4. Normalizing the vectors makes sure they are not only orthogonal but also have unit length, thus making them orthonormal. These normalized vectors form the columns of the BEFORE matrix, which represents the basis for ones 'before rotation' coordinate system.

One repeats the same process for the after-rotation dataset to obtain the AFTER matrix, which represents the basis for the 'after rotation' coordinate system.

To compute the rotation matrix, one may express how vectors in the coordinate system defined by BEFORE may be transformed into vectors in the coordinate system defined by AFTER.

Here's the breakdown: The BEFORE matrix is a change-of-basis matrix that may transform vectors from the original coordinate system to the 'before rotation' coordinate system. The inverse of BEFORE (inv(BEFORE)), therefore, transforms vectors from the 'before rotation' coordinate system back to the original coordinate system. The AFTER matrix transforms vectors from the original coordinate system to the 'after rotation' coordinate system. Therefore, by multiplying a vector by inv(BEFORE), it is first converted to the original coordinate basis, and then by multiplying by AFTER, it is converted to the 'after rotation' basis. The composition of these two transformations is the rotation transformation itself, from the 'before rotation' basis directly to the 'after rotation' basis.

## Mathematically speaking: Rotation Matrix (R) = AFTER * inv(BEFORE)

This means any vector 'v' in BEFORE coordinates can be transformed to AFTER coordinates using R: v_after = R * v_before

This implies that R directly rotates the 'before' vectors to align with the 'after' vectors, and the reason this transformation is indeed a rotation matrix, lies in the orthogonality and normalization of the matrices' columns (or basis vectors). Since the basis vectors in both BEFORE and AFTER are orthonormal, their matrices are orthogonal matrices (i.e., their inverses are equal to their transposes), and the multiplication of two orthogonal matrices is another orthogonal matrix, which in this case represents a pure rotation (assuming no reflection or improper rotation is involved).

In essence, the rotation matrix R encapsulates the rotational difference between the two coordinate systems as defined by your BEFORE and AFTER datasets.

From FindMaxCP function, the initial value of an optimization routine is obtained: This method should give better initial values for optimization than starting with an identity matrix (all zeros except diagonal ones) for several reasons:

- Geometrically Relevant Guess:
  By using maximum cross product vectors, a rotation matrix is created that has a geometric relationship to the actual set of points, as opposed to an arbitrary starting point like an identity matrix.
- Orthonormal Basis:
  Constructing an orthonormal basis, which is a more natural and suitable representation for rotations in 3D space.
- Reduction of Solution Space:

This method helps to narrow down the search space for the optimization algorithm, potentially leading to faster convergence towards the solution.

For FindingTranslation Euler ZYX convention, applied for rz, ry, rx values, may be used. Then find the residuals (after - R * before), where R is 3x3 rotational matrix. Find average values of x, y, z

In a rigid body transformation, the rotation matrix is calculated first and then the translation vector. The reason for this is that the rotation matrix changes the orientation of the points in the before position set, the correct rotation that aligns the sets before calculating the translation that aligns their centroids has to be found.

An overview of the steps involved in a typical rigid body transformation:

1. Calculate the centroids of the before and after position sets.
2. Translate both sets so that their centroids coincide.
3. Calculate the covariance matrix of the pairs of points in both sets, and use it to find the rotation matrix that aligns the two sets.
4. Apply the rotation matrix to the translated before position set to align it with the after position set.
5. Calculate the translation vector by finding the difference between the centroids of the aligned sets.
6. By following these steps, the complete transformation that aligns the before and after position sets may be obtained.

rx, ry, rz may be extracted from 3x3 rotation matrix.

Some the mathematical background of the aforementioned Euler ZYX convention:

$$\text{Euler ZYX } R = rz * ry * rx$$

Where:

- rz represents the rotation around the z-axis by angle $\varphi$
- ry represents the rotation around the y-axis by angle $\theta$
- rx represents the rotation around the x-axis by angle $\psi$

With each individual rotation matrix:

$$rz =$$
$$[ \cos(\varphi) \ -\sin(\varphi) \ 0 ]$$
$$[ \sin(\varphi) \ \cos(\varphi) \ 0 ]$$
$$[ 0 \ 0 \ 1 ]$$

$$ry =$$
$$[ \cos(\theta) \ 0 \ \sin(\theta) ]$$
$$[ 0 \ 1 \ 0 ]$$
$$[ -\sin(\theta) \ 0 \ \cos(\theta) ]$$

$$rx =$$
$$[ 1 \ 0 \ 0 ]$$
$$[ 0 \ \cos(\psi) \ -\sin(\psi) ]$$
$$[ 0 \ \sin(\psi) \ \cos(\psi) ]$$

Substituting the above rotation matrices into the overall expression for R:

R = rz * ry * rx =

[ cos(θ)cos(φ)        cos(θ)sin(φ)        -sin(θ) ]

[ sin(θ)sin(ψ)cos(φ)-cos(ψ)sin(φ)  sin(θ)sin(ψ)sin(φ)+cos(ψ)cos(φ)  sin(ψ)cos(θ) ]

[ cos(ψ)sin(θ)cos(φ)+sin(ψ)sin(φ)  cos(ψ)sin(θ)sin(φ)-sin(ψ)cos(φ)  cos(θ)cos(ψ) ]

For applying an offset to specific frame an inverse offsets may be calculated with respect to Tool[0]. Finding Offsets to specific frame (Tool 21 in this case) may be done by calculating:

Offsets in Tool 21 = Inv(T21) * Inv_T0 * T21

Where, T21 is transformation matrix from Tool[0] to Tool[21]
Inv_T0 is inverse offset found

The advantages of the method presented here, as well as of the production robot 4 and the calibration tool 5, are that no extra measuring devices are required to perform a precise calibration: The manufacturing robot 4 can execute pre-programmed sequences that are defined by its programming. This physical design does not require real-time feedback from sensors to make decisions or adjustments.

Another advantage is that both the method and the calibration device 5 are very cost-effective. Furthermore, the method can be used very flexibly, for example for design modification and/or after a gripper crash recovery etc. etc.

Overall, a precision alignment using multi-point TCPs is shown.

Reference list

1  tool
2  arm end
3  robot arm
4  robot
5  calibration device
6  target
7  fixed base
8  calibration tool
9  pointers
10  tip
11  space-fixed coordinate system
12  bracket
13  component
14  gap
15  vector (before)
16  vector (after)

**Claims**

1. A method for precision alignment of a tool (1) attachable to an arm end (2) of a robot arm (3) of a manufacturing robot (4), wherein a current tool center point (TCP) for the tool (1) is determined by using a calibration device (5) comprising a target (6) mounted on a fixed base (7) and a calibration tool (8) with a plurality of pointers (9), the tip (10) of which each forms its own tool center point, which is mounted on the arm end (2), comprising the steps:

 - Approaching the target (6) with the respective tip (10) of the respective one of the plurality of pointers (9), whereby the tip (10) of the respective pointer (9) touches the target (6); (S1)
 - Determining a respective pose, which comprises a position of the target (6) and an orientation of the respective tip (10) towards the target (6), in a first space-fixed coordinate system (11); (S2)
 - Comparing the respective determined pose with a respective initial pose, whereby a respective difference value is determined; (S3) and
 - Determining the current TCP for the tool (1) using the determined difference values. (S4)

2. The method according to claim 1,
   **characterized in that**
   the calibration tool (8) is mounted at arm end (2) instead of the tool (1) or the calibration tool (8) is mounted at arm end (2) together with the tool (1).

3. The method according to claim 1 or 2,
   **characterized in that**
   a rotation and/or a translation is determined for the respective difference value on the basis of the comparison.

4. The method according to claim 3,
   **characterized in that**
   the rotation is determined through an optimization method.

5. The method according to any one of the preceding claims,
   **characterized in that**
   the respective initial pose is determined with a first bracket (12) and the respective pose is determined with a second bracket (12) of the manufacturing robot (4).

6. The method according to any one of the preceding claims,
   **characterized in that**
   the target is placed on a component (13) to be processed by the manufacturing robot (4).

7. The method according to any one of the preceding claims,
   **characterized in that**
   several differently placed targets (6) are used.

8. A calibration device (5) for precision alignment of a tool (1) attachable to an arm end (2) of a robotic arm (3) of a manufacturing robot (4), comprising a target (6) mounted on a fixed base (7) and a calibration tool (8) having a plurality of pointers (9), the tip (10) of which each forms its own tool center point (TCP), and adapted for a method according to any one of the preceding claims.

9. The calibration device (5) according to claim 8,
   **characterized in that**
   the target (6) is designed as a spherical element rotatable mounted in a socket of the base, its center being fixed relative to the base during rotation.

10. A manufacturing robot (4) comprising a calibration device (5) according to claim 8 or 9 and/or designed to perform a method according to any one of claims 1 to 7.

*Fig.1*

*Fig.2*

Fig. 3

*Fig.4*

Fig.5

Fig.6

Fig.7

Fig.8

*Fig.9*

| | Europäisches Patentamt European Patent Office Office européen des brevets | **EUROPEAN SEARCH REPORT** | Application Number EP 24 17 4524 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 246 116 B (FUSHENG PREC CO LTD) 23 August 2022 (2022-08-23) | 1-5,8,10 | INV. B25J9/16 |
| Y | * the whole document * ----- | 6,7,9 | |
| Y | US 2011/046782 A1 (FIXELL PETER [SE]) 24 February 2011 (2011-02-24) * figures 2,4 * * paragraph [0042] * ----- | 6,7,9 | |

**TECHNICAL FIELDS SEARCHED (IPC)**

B25J
G05B

The present search report has been drawn up for all claims

| Place of search | Date of completion of the search | Examiner |
|---|---|---|
| The Hague | 13 November 2024 | Antonopoulos, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 17 4524

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2024

| Patent document cited in search report | | Publication date | Patent family member(s) | | Publication date |
|---|---|---|---|---|---|
| CN 113246116 | B | 23-08-2022 | CN | 113246116 A | 13-08-2021 |
| | | | TW | 202130476 A | 16-08-2021 |
| US 2011046782 | A1 | 24-02-2011 | AT | E532610 T1 | 15-11-2011 |
| | | | CN | 102015221 A | 13-04-2011 |
| | | | EP | 2268459 A1 | 05-01-2011 |
| | | | US | 2011046782 A1 | 24-02-2011 |
| | | | WO | 2009132703 A1 | 05-11-2009 |

EPO FORM P0459

For more details about this annex : see Official Journal of the European Patent Office, No. 12/82

**REFERENCES CITED IN THE DESCRIPTION**

**Patent documents cited in the description**

- EP 2767370 A2
- EP 2783814 A2